(19) Europäisches Patentamt
European Patent Office
Office européen des brevets

(11) **EP 4 201 675 A1**

(12) **EUROPÄISCHE PATENTANMELDUNG**

(43) Veröffentlichungstag:
**28.06.2023 Patentblatt 2023/26**

(21) Anmeldenummer: 22215011.2

(22) Anmeldetag: **20.12.2022**

(51) Internationale Patentklassifikation (IPC):
**B32B 27/36** (2006.01)     **B32B 7/022** (2019.01)
**B32B 7/023** (2019.01)     **B32B 27/08** (2006.01)
**B32B 27/18** (2006.01)     **C08J 5/18** (2006.01)
**C08L 67/00** (2006.01)

(52) Gemeinsame Patentklassifikation (CPC):
(C-Sets verfügbar)
**B32B 27/36; B32B 7/022; B32B 7/023;**
**B32B 27/08; B32B 27/18; B32B 27/20;**
**C08K 5/5415; C08L 67/02;** B32B 2250/03;
B32B 2250/244; B32B 2255/10; B32B 2264/0214;
B32B 2264/302; B32B 2264/303; B32B 2272/00;

(Forts.)

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**KH MA MD TN**

(30) Priorität: **22.12.2021 DE 102021134261**

(71) Anmelder: **Mitsubishi Polyester Film GmbH**
**65203 Wiesbaden (DE)**

(72) Erfinder:
• **Hummel, Miriam**
  **65385 Rüdesheim (DE)**
• **Klein, Dagmar**
  **55437 Ockenheim (DE)**
• **Kliesch, Holger**
  **65462 Ginsheim-Gustavsburg (DE)**
• **Michalski, Artur**
  **55435 Gau-Algesheim (DE)**
• **Kuhmann, Bodo**
  **65594 Runkel (DE)**

(74) Vertreter: **Schweitzer, Klaus**
**Plate Schweitzer Zounek**
**Patentanwälte**
**Rheingaustrasse 196**
**65203 Wiesbaden (DE)**

(54) **TRANSPARENTE, EINSEITIG GLATTE POLYESTERFOLIE MIT POLYMETHYLSILSESQUIOXAN BASIERTEN PARTIKELN**

(57) Die Erfindung betrifft eine mindestens drei-schichtige biaxial orientierte Polyesterfolie, enthaltend mindestens eine Basisschicht B, eine raue Deckschicht A und eine glatte Deckschicht C, wobei die Deckschichten A und C jeweils Außenschichten sind und auf den sich gegenüberliegenden Oberflächen der Basisschicht B angeordnet sind, wobei die Deckschicht A Polymethylsilsesquioxan basierte Partikel enthält, die Deckschicht C weniger als 0.1 Gew.-% Partikel enthält, die von den Polymethylsilsesquioxan basierten Partikeln der Deckschicht A verschieden sind (wobei die Gewichtsprozentangaben sich auf die Masse der jeweilige Schicht beziehen) und wobei der Polyester, der zur Herstellung aller Schichten der mindestens dreischichtigen Polyesterfolie verwendet wird, keine von Naphthalin-2,6-dicarbonsäure abgeleiteten Einheiten als Wiederholungseinheit enthält und wobei die Folie insgesamt weniger als 0.1 Gew.-% (bezogen auf die Masse der Gesamtfolie) Partikel enthält, und wobei die Polyester, die zur Herstellung der Deckschichten der Folie verwendet werden, Isophthalsäure-abgeleitete Wiederholungseinheiten in einer Menge von < 19 Gew.-% (bezogen auf die Masse der jeweiligen Deckschicht) enthalten. Die Erfindung betrifft ferner ein Verfahren zur Herstellung der Folie sowie de-ren Verwendung als Prozessfolie zur Übertragung von Oberflächeneigenschaften, insbesondere für Möbelo-berflächen.

EP 4 201 675 A1

(52) Gemeinsame Patentklassifikation (CPC): (Forts.)
     B32B 2307/412; B32B 2307/518; B32B 2307/538;
     B32B 2307/732; B32B 2307/748; B32B 2451/00

     C-Sets
     **C08L 67/02, C08L 83/04**

## Beschreibung

Biaxial orientierte, mindestens dreischichtige, einseitig glatte Polyesterfolie mit mindestens einer Partikel-haltigen Außenschicht sowie Verfahren zu ihrer Herstellung und ihre Verwendung als Prozessfolie zur Übertragung von Oberflächeneigenschaften, insbesondere für Möbeloberflächen.

## Zusammenfassung

Die vorliegende Erfindung betrifft eine einseitig glatte, biaxial orientierte, Polyesterfolie mit hoher Transparenz, geringer Trübung und einer der glatten Seite gegenüberliegenden Außenschicht mit Polymethylsilsesquioxan basierten Partikel als Prozesshilfsmittel mit einer Gesamtdicke von 12-90 $\mu$m. Die erfindungsgemäße Folie eignet sich hervorragend zur Übertragung einer glatten, hochglänzenden Oberfläche auf Lacke, wie sie insbesondere für Möbeloberflächen gewünscht werden. Die glatte Seite ist dabei weitgehend partikelfrei. Das Partikelsystem auf der Rückseite ist dabei so gut eingebunden und von Größe und Form so gewählt, dass es bei Nutzung der Folie nicht zu Partikelabrieb kommt, der die glatte Seite beim Einwickeln von Abrieb beschädigen würde und dadurch gekennzeichnet, dass sich die Partikel nicht in einem störenden Maße in die gegenüberliegende glatte Seite eindrücken.

## Beschreibung

Für viele Anwendungen, insbesondere Lacke im Möbelbereich, aber auch andere Kunststoffoberflächen, wie zum Beispiel PU-Formteile, ist eine besonders glatte, hochglänzende Oberfläche aus Designgründen erwünscht. Häufig bilden sich jedoch in diesen Lacken oder Kunststoffen Oberflächenunebenheiten beim Aufbringen, so dass in der Praxis häufig mit einer glatten Schablone gearbeitet wird, die ihre Oberfläche auf den Lack oder das Formteil überträgt. Als Schablone eignet sich zum Beispiel eine Polyesterfolie, die zumindest einseitig sehr glatt sein muss, um eine besonders ebene und gleichmäßige Oberfläche mit hohem Glanz zu gewährleisten.

Solche Folien enthalten zweckmäßigerweise aber der glatten Seite gegenüberliegend eine rauere Oberfläche, die den Transport der Folie im Herstellungsprozess und ihr Handling im späteren Verarbeitungsprozess ermöglicht bzw. erleichtert. Zwei pigmentfreie Oberflächen würden auf dem Wickel zudem miteinander verkleben und sich ggf. nur unter Oberflächenbeschädigungen wieder abwickeln lassen.

Folien mit einseitig glatter Oberfläche sind im Stand der Technik bekannt. So ist zum Beispiel in EP-A-1 410 905 eine mehrschichtige Polyesterfolie beschrieben, die eine partikelfreie Oberfläche aufweist. EP-A-1 410 905 beschreibt die Verwendung von Siliziumdioxidpartikeln mit einer Partikelgröße bis zu 4,0 $\mu$m in der rauen Seite. Siliziumdioxidpartikel sind hart und führen unter Druck zu einer Oberflächenverformung, auch auf der gegenüberliegenden, glatten Seite, wenn der Abstand der partikelhaltigen Schichtgrenze bis zur Oberfläche der glatten Schicht auf der Folienaußenseite kleiner als 8$\mu$m ist. Zudem drücken sich diese harten Partikel beim Wickeln der Folie in die glatte Schicht und führen so zu einer Vertiefung in dieser glatten Schicht. Diese verursachen im zu übertragenden Lack einen sichtbaren Schaden.

In EP-A-1 884 357 wird ebenfalls eine einseitig glatte Polyesterfolie beschrieben, die eine partikelfreie Oberfläche aufweist und auf der gegenüberliegenden Oberfläche als Prozesshilfe ein inkompatibles Polymer enthält, das zur gewünschten Oberflächenrauigkeit, aber auch zur starken Eintrübung der Folie führt. Aufgrund der erheblichen Eintrübung leidet die Nutzbarkeit der Folie in der Endanwendung, speziell wird das Aushärten des Lackes mit Licht, z.B. UV-Härtung, erheblich erschwert und eine Prozesskontrolle durch die Folie hindurch vor dem Abziehen unmöglich gemacht.

In EP-A-3178651 wird ebenfalls eine einseitig glatte Polyesterfolie beschrieben, die eine nahezu partikelfreie Oberfläche aufweist und auf der gegenüberliegenden Oberfläche als Prozesshilfe Calciumcarbonat-Partikel enthält. Diese haben erhebliche Vorteile gegenüber den SiO2 Partikeln wie in EP-A-1 410 905 beschrieben und verletzen die glatte Seite beim Wickeln deutlich weniger. Reines Calciumcarbonat ist aber relativ schlecht in die Polyestermatrix eingebunden und es kommt beim Schneiden der Folie und beim Auf- und Abwickeln zu Abrieb, der sich auf der Folienoberfläche anheften kann und dann beim Aufwickeln in die glatte Oberfläche eingeprägt werden kann, was zu Kratzern führen würde. In EP-A-3178651 ist zwar alternativ auch die Verwendung eines speziellen oberflächenbehandelten Calciumcarbonates (Vaterit) beschrieben, welche das Abriebproblem deutlich reduziert, aber durch die spezielle Fällmethode und die Oberflächenbehandlung als zusätzliche aufwendige Prozessschritte ein sehr teures Partikelsystem. Weiterhin neigen die Fette und Polymere Carbonsäuren enthaltenden Oberflächenbehandlungsmittel zur Migration insbesondere von Fettsäuren an die Folienoberfläche, die beim Wickeln auf die glatte Folienoberfläche abklatschen und die Trenneigenschaften (insbesondere deren Gleichmäßigkeit) der glatten Oberfläche beinträchtigen können.

Die Aufgabe der vorliegenden Erfindung war es daher eine einseitig glatte, biaxial orientierte Polyesterfolie bereitzustellen, bei der eine wirtschaftliche Weiterverarbeitung sowie eine geringe Eintrübung der Folie gewährleistet ist. Weiterhin darf die glatte Seite der Folie nicht nachteilig durch Einprägungen beschädigt werden, nicht zu Partikelabrieb neigen und die Folie darf keine die Trenneigenschaften beeinträchtigende migrierende Substanzen enthalten.

Gelöst wird diese Aufgabe durch eine mindestens dreischichtige biaxial orientierte Polyesterfolie, enthaltend mindestens eine Basisschicht B, eine raue Deckschicht A und eine glatte Deckschicht C, wobei die Deckschichten A und C jeweils Außenschichten sind und auf den sich gegenüberliegenden Oberflächen der Basisschicht B angeordnet sind, wobei die Deckschicht A Polymethylsilsesquioxan basierte Partikel enthält, die Deckschicht C weniger als 0.1 Gew.-% Partikel enthält, (wobei die Gewichtsprozentangaben sich auf die Masse der jeweilige Schicht beziehen) und wobei die Folie insgesamt weniger als 0.1 Gew.-% (bezogen auf die Masse der Gesamtfolie) Partikel enthält, und wobei die Polyester, die zur Herstellung der Deckschichten der Folie verwendet werden, Isophthalsäure-abgeleitete Wiederholungseinheiten in einer Menge von < 19 Gew.-% (bezogen auf die Masse der jeweiligen Deckschicht) enthalten.

Eine solche Folie weist die folgenden Eigenschaften auf:

- Transparenz von 85 bis 97 %

- Trübung von < 7 %

- Eine Gesamtfoliendicke von 12 - 90 $\mu$m

- Eine glatte Deckschicht C mit einer Rauheit Sa < 10 nm, Sp < 100 nm, Sv < 100 nm, und einer gesamten Partikelanzahl <20, gemessen nach ISO 25178-2

- Eine glatte Deckschicht C, die weniger als 0,1 Gew.-% Partikel enthält

- Eine glatte Deckschicht C mit einer Dicke von mindestens 2 $\mu$m

- Eine raue Deckschicht A mit einer Rauheit Sa $\geq$ 11 nm, Sp $\geq$ 120 nm, Sv $\geq$ 120

- Wobei die raue Deckschicht A Polymethylsilsesquioxan basierte Partikel einer gemittelten Größe $d_{50}$ von 0,5 $\mu$m bis 1,5 $\mu$m und einem Partikelgehalt von 0,1 bis 0,7 Gew.-% enthält.

Die Gesamtfoliendicke beträgt mind. 12 $\mu$m und maximal 90 $\mu$m. Bevorzugt liegt die Foliendicke bei mindestens 23 $\mu$m und maximal 80 $\mu$m und idealerweise bei mindestens 35 $\mu$m und maximal 76 $\mu$m. Liegt die Foliendicke unter 12 $\mu$m, so reicht die Steifigkeit nicht aus, um diese gleichmäßig auf die Oberfläche aufbringen zu können und einen gleichmäßigen Transfer des Lackes auf das unterliegende Substrat zu gewährleisten. Mit zunehmender Dicke verbessert sich tendenziell von 12 bis etwa 35 $\mu$m die Qualität des zu übertragenden Lackes. Oberhalb von 90 $\mu$m wird die Folie zu steif und legt sich nicht mehr ausreichend an das Substrat an. Zudem steigen mit der zunehmenden Dicke der Flächenpreis und der Einsatz der Folie wird damit weniger wirtschaftlich. Mit zunehmender Dicke steigt aber auch die Prozessfähigkeit in den nachgeschalteten Lacktransferprozessen, da das Risiko von Folienabrissen, Faltenbildung, oder die Bildung lokaler Verdehnungen deutlich sinkt. Bei höherer Foliendicke lässt sich zudem die partikelfreie Deckschicht wirtschaftlich mit größerer Dicke herstellen, da bei konventionellen Polyesterfolien-Dreischichtanlagen, die Flächenleistung bei einem Anteil einer Deckschicht etwa 10 % der Gesamtdicke ein Optimum erreicht. Die optimale wirtschaftliche Nutzbarkeit erreicht die Folie daher im Dickenbereich zwischen 35 und 76 $\mu$m.

Die Folie ist mindestens dreischichtig, weist eine glatte Deckschicht C und eine gegenüberliegende Deckschicht A auf, die Polymethylsilsesquioxan basierte Partikel enthält. Dazwischen liegen mindestens eine Basisschicht und eventuell weitere Zwischenschichten.

Ein nur zweischichtiger Aufbau ohne die Basisschicht ist nicht möglich, da dadurch entweder die partikelhaltige Schicht zu dick werden müsste, was zu schlechten optischen Eigenschaften (Transparenz, Trübung) führt oder die glatte Schicht zu dick wäre, was eine wirtschaftliche Rückführung von Regenerat in die partikelhaltige Schicht nicht möglich machen würde.

Der Anteil der Basisschicht an der Gesamtfoliendicke beträgt mindestens 60 %, bevorzugt mindestens 70 % und besonders bevorzugt mindestens 80 %. Hierdurch ist eine wirtschaftliche Rückführung des anfallenden Regenerates erleichtert.

Die partikelhaltige Deckschicht A hat bevorzugt eine Mindestdicke von 0,8 $\mu$m und maximal 3,7 $\mu$m, besonders bevorzugt 1,0 $\mu$m bis 3,5 $\mu$m und ganz besonders bevorzugt 1,4 $\mu$m bis 3,0 $\mu$m dick. Unterhalb von 0,8 $\mu$m ist bei den weiter unten beschriebenen geeigneten Partikelgehalten das Erzielen eines ausreichend guten Wickelergebnisses nur schwer zu erreichen. Die Pigmentmenge ist dann möglicherweise nicht ausreichend. Oberhalb von 3,5 $\mu$m wird keine weitere Verbesserung des Wickelergebnisses durch Dickensteigerung erzielt und es kommt zu einer unerwünschten höheren Trübung und geringeren Transparenz der Folie durch das Einbringen der Partikel (u.a. auch durch Einbringung von mehr Partikeln über das entstehende Regenerat).

Die glatte, weitgehend partikelfreie Deckschicht C ist bevorzugt mindestens 2 $\mu$m dick, besonders bevorzugt

mindestens 2,5 $\mu$m, ganz besonders bevorzugt mindestens 3,0 $\mu$m und idealerweise mindestens 4,0 $\mu$m dick. Grundsätzlich bringt eine weitere Erhöhung der weitgehend partikelfreien Schichtdicke bis zu 8,0 $\mu$m eine weitere Verbesserung der Oberfläche, darüber hinaus wird keine weitere Verbesserung erzielt. Unterhalb von 2 $\mu$m drücken sich Partikel aus der Basisschicht (Partikel aus Regenerat, oder auch Katalysatorpräzipitate und sonstige Verunreinigungen) durch die Deckschicht durch und erzeugen unerwünschte Erhebungen auf der Oberfläche der Deckschicht C.

Das in der Folienproduktion anfallende Regenerat kann sowohl der partikelhaltigen Deckschicht A als auch der Basisschicht B zugeführt werden. Bevorzugt wird das Regenerat nur der Basisschicht B zugeführt, so dass keine oder eine nur geringe Beeinträchtigung der Oberfläche durch das zugeführte, partikelhaltige Regenerat stattfindet.

Wenn die Deckschichten zu dick werden, sinkt die Wirtschaftlichkeit, da Regenerate bevorzugt der Basisschicht B zugeführt werden und bei zu geringer Dicke der Basisschicht B im Vergleich zur Gesamtdicke dieser Schichten dann prozentual zu viel Regenerat zugeführt werden muss, um den Regeneratkreislauf zu schließen.

Bevorzugt enthält die Deckschicht A Polymethylsilsesquioxan basierte Partikel in einer Menge von 0,1 Gew.-% bis 0,7 Gew.-%, besonders bevorzugt von 0,15 Gew.-% bis 0,6 Gew.-% und ganz besonders bevorzugt von 0,2 Gew.-% bis 0,35 Gew.-%.

Unterhalb von 0,1 Gew.-% ist eine ausreichende Wickelhilfe durch die Partikel nicht erreichbar. Oberhalb von 0,7 Gew.-% besteht die Gefahr der Agglomeratbildung, die sich beim Wickeln in die gegenüberliegende, glatte Deckschicht C einpressen können. Außerdem steigern Agglomerate die Trübung der Folie, was nicht erwünscht ist. Die Partikel haben bevorzugt einen gemittelten Durchmesser (d50) von 0,5 $\mu$m bis 1,5 $\mu$m, besonders bevorzugt 0,6 $\mu$m) bis 1,2 $\mu$m und ganz besonders bevorzugt 0,65 $\mu$m bis 1,0 $\mu$m. Kleinere d50 Werte als 0,5 $\mu$m führen zu einem deutlich verschlechterten Wickelergebnis, und größere d50 Werte als 1,5 $\mu$m führen zu tiefen Verprägungen beim Wickeln in der dann gegenüberliegenden, glatten Deckschicht C. Je größer der Partikelgehalt in Gew.-% ist, umso größer ist auch die Gefahr, dass sich doch einzelne Agglomerate bilden, die dann groß genug werden um sich beim Wickeln in die glatte Deckschicht C einzuprägen.

Grundsätzlich können dabei Partikel mit unterschiedlichem $d_{50}$ Werten kombiniert werden. Überraschenderweise hat sich aber gezeigt, dass bei Verwendung der erfindungsgemäßen Partikel eine enge Größenverteilung aller Partikel (idealerweise monodispers) zu einem besseren Wickelergebnis bei gleichem Gesamtpigmentgehalt führt als z.B. die Kombination von größeren Polymethylsilsesquioxan basierten Partikeln mit $d_{50}$ von 1,3 $\mu$m mit kleineren Polymethylsilsesquioxan basierten Partikeln von z.B. $d_{50}$ 0,7 $\mu$m.

Es hat sich daher als günstig erwiesen, wenn die Partikelverteilung unterhalb von 1,5 $\mu$m und oberhalb von 0,5 $\mu$m weitgehend monodispers ist. Dies ist dann gegeben, wenn sich mehr als 60 % aller Partikel in diesem Größenbereich in einem Größenintervall von +/- 0,2 $\mu$m um das höchste Maximum der Partikelverteilung in diesem Bereich befinden.

Als ungeeignet erwiesen haben sich Partikel auf Basis von Polyurethan. Auch bei stark vernetzten PU Partikeln kommt es zu einer Gelb-/Orangefärbung der Folie, welche bei Einsatz von Regenerat noch zunimmt.

Vernetzte Polystyrole (z.B. mit Divinylbenzol als Vernetzer) sind nicht ausreichend gut eingebunden und führen daher zu einer Trübungszunahme, die die einsetzbaren Mengen beschränken, zudem wird das Polystyrol thermisch abgebaut, was zu messbaren Ausgasungen von Styrol im Produktionsbereich führt. Polystyrol-Partikel sind daher weniger bevorzugt im Sinne der Erfindung.

Polypropylen basierte Partikel haben ebenfalls eine schlechte Einbindung in die Polyestermatrix und führen auch zu einer Gelbfärbung der Folie und sind daher ungeeignet im Sinne der Erfindung.

PMMA basierte Partikel führen, wenn unvernetzt, zu einer starken rheologischen Veränderung der Schmelze, die zu einem schlechten Dickenprofil der Folie führt. Wie bereits erwähnt sind unvernetzte Partikel nicht geeignet im Sinne der Erfindung. Überraschenderweise zeigten auch PMMA Partikel mit unterschiedlichen Vernetzungsgraden noch einen negativen Einfluss auf die Stabilität der Viskosität der Schmelze im Extruder. Bei niedrigen Dosierungen ist die resultierende Dickengleichmäßigkeit bei guter Prozessführung akzeptabel. Je höher der Partikelgehalt in der pigmentierten Schicht, desto schwieriger wird das Erreichen einer guten Dickengleichmäßigkeit. PMMA Partikel werden weiterhin unter den Polyesterextrusionsbedingungen teilweise zerkleinert, was zu Partikelbruchstücken führt, die nicht mehr ausreichend zur Antischlupfwirkung beitragen, weshalb initial mehr Partikel als theoretisch benötigt eingesetzt werden müssen. PMMA Partikel sind daher weniger geeignet im Sinne der Erfindung.

Überraschenderweise haben sich PMSQ (Polymethylsilsesquioxane) basierte Partikel als besonders geeignet erwiesen. Während man üblicherweise bei der Verwendung von Verbindungen, die Siloxanen ähnlich sind, ein Ausmigrieren niedermolekulare Bestandteile erwartet hätte (dies könnten dann beim Wickeln auf die glatte Seite übertragen werden, abklatschen, und dort die Gleichmäßigkeit der Lackschicht in den nachgeschalteten Prozessschritten negativ beeinträchtigen), trat dies bei der Verwendung von PMSQ (Polymethylsilsesquioxane) basierten Partikeln nicht auf. Solche Partikel sind z.B. unter dem Markennamen E+ (PMSQ) von Coating Products OHZ E.K., Sachsenring 11, 27711 Osterholz-Scharmbeck, Deutschland erhältlich.

Die Polymethylsilsesquioxan basierten Partikel enthalten kovalent gebundene Einheiten der Formel CnH2n+x als Teil der Struktur. Dabei ist n größer als Null und bevorzugt kleiner als 10, besonders bevorzugt kleiner als 5 und idealerweise kleiner als 4, denn zu lange aliphatische Kohlenwasserstoffstrukturelemente im Polymer verschlechtern die Einbindung in die Polyestermatrix. Weiterhin ist x entweder 0 oder 1, wobei 1 bevorzugt ist.

Die Polymethylsilsesquioxan basierten Partikel bestehen dabei aus einem vernetzten oder teilvernetzten Polymer. D.h. es handelt sich um feste Partikel und nicht aufgeschmolzenes inkompatibles Polymer, welches in sphärischer Form in der Folie enthalten ist.

Gemäß der vorliegenden Erfindung ist es bevorzugt, dass die Partikel einen K-Wert (10% Druckfestigkeit) von < 32 MPa, bevorzugt von kleiner 25 MPa und besonders bevorzugt von < 19 MPa besitzen. Der K-Wert ist dabei bevorzugt größer als 6 MPa, besonders bevorzugt größer als 8 MPa und idealerweise größer als 10 MPa. Ein kleiner K-Wert führt beim Wickel unter dem Lagendruck dazu, dass sich die Partikel eher selbst verformen, als dass sie sich in die gegenüberliegende Lage eindrücken, was Beschädigungen dieser Lage weiter unwahrscheinlicher macht. Ist der K-Wert zu gering (insbesondere < 6 MPa), so verformen sich die Partikel bereits beim Aufwickeln und verlieren einen Teil ihrer Oberflächenaktivität, d.h. die effektive Rauheit sinkt und ein faltenfreies Aufwickeln der Folie gelingt nicht mehr im ausreichenden Maße. Der K-Wert ist dabei definiert als die Kraft, die gebraucht wird, um die Partikel um 10% zu komprimieren.

Die Gesamtpartikelmenge (Menge an Polymethylsilsesquioxan basierten Partikeln und von diesen verschiedenen Partikeln), bezogen auf das Gesamtgewicht der Folie, liegt in einer bevorzugten Ausführungsform bei maximal 0,1 Gew. %, bevorzugt bei maximal 0,07 Gew.-% und besonders bevorzugt bei maximal 0,04 Gew.-%. Je höher der Gehalt an Partikel, desto größer ist die Trübung und desto geringer die Transparenz mit der beschriebenen, negativen Wirkung auf die UV-Aushärtung.

Weißfärbende, jedoch mit dem Hauptbestandteil Polyester inkompatible unvernetzte Polymere, wie Polypropylen, COC's, Polyethylen, Polystyrol etc. sind im Sinn der Erfindung zu weniger als 0,1 Gew.-% und idealerweise überhaupt nicht (zu 0 Gew.-%) enthalten, da diese zu einer deutlichen Erhöhung der Trübung und Verringerung der Transparenz führen.

Weißfärbende Partikel wie Titandioxid und Bariumsulfat sind in der Folie zu weniger als 0,05 Gew.-%, bevorzugt weniger als 0,03 Gew.-% und idealerweise gar nicht (zu 0 Gew.-%) enthalten, da sie die Transparenz insbesondere im UV-Bereich stark reduzieren.

Die Folie kann neben den erfindungsgemäßen Polymethylsilsesquioxan basierten Partikeln weitere Partikel, z.B. Calciumcarbonat, Siliziumdioxid oder Aluminiumtrioxid enthalten, wobei der Gehalt solcher Partikel bevorzugt bei < 0,05 Gew.-%, besonders bevorzugt bei < 0,03 Gew.-% und insbesondere bei kleiner 0,01 Gew.-% bezogen auf das Gesamtgewicht der Folie liegt. Andere Partikel außer den bevorzugten Partikeln führen zu einer Verringerung der Transparenz und einer Erhöhung der Trübung, weiterhin erhöht sich die Gefahr der Agglomeratbildung mit der Folge von Verprägungen in der glatten Folienseite.

Die glatte Folienseite bildende Deckschicht C enthält bevorzugt < 0,1 Gew.-%, besonders bevorzugt <0,01 Gew.-% und insbesondere gar keine absichtlich zugegebene Partikel bezogen auf die Schicht C. Alle Partikel in der Schicht C erhöhen die Oberflächenrauheit und führen zu Verprägungen im übertragenen Lack. Die Schicht C kann Partikel enthalten, die aus dem bei der Herstellung des Polyesters verwendeten Katalysator stammen. Um auch diese Partikel weitgehend zu reduzieren, werden in der Schicht C die weiter unten beschrieben Polymere bevorzugt verwendet.

Das Polymer der Basisschicht B und der übrigen Schichten besteht bevorzugt zu mindestens 90 Gew.-%, besonders bevorzugt zu 95 Gew.-% aus einem thermoplastischen Polyester. Bevorzugt ist dabei ein Polyester aus Ethylenglykol und Terephthalsäure (= Polyethylenterephthalat, PET). Nicht geeignet sind Polyester, die Naphthalin-2,6-dicarbonsäure als Wiederholungseinheit enthalten, da diese zu einer unerwünschten UV-Absorption führen. Insbesondere fällt dies ins Gewicht, wenn der Anteil der Naphthalin-2,6-dicarbonsäure abgeleiteten Einheiten in der Basisschicht über 5 Gew.-% liegt. Der Polyester kann weitere Monomere, wie Isophthalsäure oder Cyclohexandimethanol oder Ethylenglykol enthalten. Die Polyester, die zur Herstellung der Deckschichten der Folie verwendet werden enthalten Isophthalsäure-abgeleitete Wiederholungseinheiten in einer Menge von < 19 Gew.-% (bezogen auf die Masse der jeweiligen Deckschicht). Das bedeutet, der Isophthalsäuregehalt in den Deckschichten liegt bei < 19 Gew.-%, besonders bevorzugt bei < 15 Gew.-% und insbesondere bei < 10 Gew.-%, da sonst die Gefahr der Übertragung von Polyester auf den Lack besteht. Der Anteil an Cyclohexandimethanol liegt bevorzugt bei < 2 Gew.-%, da dies die Mechanik der Folie negativ beeinflusst. In einer bevorzugten Ausführungsform enthalten die Deckschichten < 2 Gew.-%, ganz besonders bevorzugt < 1,5 Gew.-% andere Monomere außer Ethylenglykol und Terephthalsäure, da bei Verwendung weiterer Monomere die Gefahr des Anquellens der Folienoberfläche bei der Aufbringung des Lackes besteht.

Bevorzugt im Sinne der Erfindung ist die Verwendung von auf der PTA-Route (purified therephthalic acid) hergestellten Polyestern, da bei der Verwendung von DMT-Polyestern (Dimethyltherephthalat) in der Regel mehr UV-aktive Nebenprodukte entstehen, die aus den genannten Gründen unerwünscht sind. Das Polymer der Deckschichten (insbesondere der glatten Deckschicht) enthält in einer bevorzugten Ausführungsform kein Calcium als Umesterungskatalysator und kein Antimon als Polykondensationkatalysator, da diese zur Bildung großer Katalysatorpräzipitate neigen, die als Partikel selbst die Gleichmäßigkeit des aufgetragenen Lackes stören und wenn sie in der Partikel haltigen Deckschicht auftreten zu Verprägungen in der glatten Schicht C führen können. Bevorzugt enthalten die beiden Außenschichten (Deckschicht A und Deckschicht C) Polymere, die Titan-Verbindungen als Polykondensationskatalysator und MagnesiumVerbindungen oder Mangan-Verbindung als Umesterungskatalysatoren enthalten. In einer besonders bevorzugten Ausführungsform enthält keine der Schichten ein Polymer mit Calcium als Umesterungskatalysator oder Antimon als Polykondensationskatalysator.

Für die Herstellung der erfindungsgemäßen Folie wird der SV-Wert des Polyesters zweckmäßigerweise so gewählt, dass die Folie einen SV-Wert von > 600, bevorzugt von > 650 und idealerweise von > 700 aufweist. Der SV-Wert der Folie ist dabei bevorzugt < 950 und besonders bevorzugt < 850. Liegt der SV-Wert unterhalb von 600, so wird die Folie schon bei der Herstellung so brüchig, dass es zu häufigen Abrissen kommt. Außerdem werden die weiter unten genannten mechanischen Festigkeiten bei geringerem SV-Wert nicht mehr sicher erreicht. Wenn die Folie einen höheren SV als 950 aufweist, dann wird das Polymer im Extruder so zäh, dass übermäßig hohe Ströme auftreten und es zu Druckschwankungen in der Extrusion kommt. Dies führt zu einer schlechten Laufsicherheit. Außerdem wird der Abrieb an den Extrusionswerkzeugen und an den Schneidwerkzeugen unverhältnismäßig hoch.

Die Folie muss zudem eine hohe Transmission im Wellenlängenbereich von 330 nm bis 400 nm aufweisen. Diese liegt bei jeder Wellenlänge im angegebenen Bereich bei größer 50 %, bevorzugt bei größer 60 % und idealerweise bei größer 72 % (Verfahren s. Messmethoden).

Je höher die Transparenz im UV-Bereich, desto schneller und vollständiger erfolgt die UV-Aushärtung des Lackes durch die Folie hindurch. Die UV-Transparenz wird dabei sowohl durch die eingebrachte Gesamtpartikelmenge (siehe oben) reduziert, als auch durch die Auswahl des Polyesters beeinflusst. Bei Polyethylenterephthalatrohstoffen haben sich hierbei auf der PTA-Route hergestellte Rohstoffe, denen auf der dem Weg der DMT-Route hergestellten als überlegen bewiesen. Besonders ungünstig ist die Verwendung von Dimethylnaphthalat als Monomer oder das Einbringen von UV-Stabilisatoren oder optischen Aufhellern in die Folie.

Weiterhin führen gelbe Farbstoffe zu einer Reduktion der UV-Durchgängigkeit. Gelbe Abbauprodukte können auch bei der Regenerierung der Polyesterfolie entstehen. Daher liegt der Anteil an rückgeführtem Regenerat bevorzugt bei kleiner 70 Gew.-%, besonders bevorzugt bei kleiner 60 Gew.-%, insbesondere bei kleiner 55 Gew.-% bezogen auf das Gesamtgewicht des Extrudates (Polyester plus alle Zusatzstoffe) in allen Schichten. Die Gelbzahl YID der Folie ist bevorzugt kleiner 3,0, besonders bevorzugt < 2,0 und idealerweise < 1,8. Diese Werte sind durch die Verwendung der erfindungsgemäßen Partikel und Rohstoffe zu erreichen, selbst dann, wenn bis zu 70 Gew.-% Regenerat zugeführt werden. Wenn zum Beispiel andere Materialien, z.B. inkompatible Polymere wie COC oder Polypropylen, Polyurethan oder Bariumsulfat als Partikel verwendet werden, ist das Erreichen dieser Werte schwierig bis unmöglich.

Neben der Transparenz im UV-Bereich liegt die Transparenz der Folie nach ASTM D 1003-61 im sichtbaren Wellenlängenbereich zwischen 85% bis 97 %, bevorzugt bei mindestens 89 %, besonders bevorzugt bei 90 %, da so eine Inspektion des Substrates und des aufgebrachten Lackes durch die Folie hindurch erleichtert wird. Aus dem gleichen Grund liegt die Trübung bevorzugt bei < 7 %, besonders bevorzugt bei < 6 % und insbesondere bei < 5 %. Eine höhere Trübung beeinträchtigt zudem die UV-Aushärtung.

Die erfindungsgemäße Transparenz und Trübung werden durch die Auswahl des Partikelmaterials, der Partikelgröße und des Partikelgehalts sowie durch die Monomodalität der Partikelgrößenverteilung erreicht, als auch durch Auswahl geeigneter Polymere und das untenstehende Herstellverfahren.

Für die Verwendung der erfindungsgemäßen Folie in der untenstehenden Anwendung ist die Rauheit der Folie von besonderer Bedeutung. Dabei liegt die Rauheit ausgedrückt durch den Sa-Wert der glatten Deckschicht C bei < 10 nm und Sp bei < 100 nm und Sv bei < 100 nm, bevorzugt bei Sa < 8 nm und Sp < 90 nm und Sv < 60 nm, besonders bevorzugt bei Sa < 5 nm und Sp < 70 nm und Sv < 50 nm und idealerweise liegt Sa bei kleiner 3 nm und Sp < 60 nm und Sv < 20. Als weiterer Parameter zur Beschreibung der Rauheit ist die gesamte Partikelanzahl auf der glatten Deckschicht C <20, bevorzugt <15 und besonders bevorzugt <12. Je geringer die Werte für Sa, Sp und die gesamte Partikelanzahl, desto höher ist die Oberflächengleichmäßigkeit des übertragenen Lackes und damit dessen Glanz.

Die Rauheit der mit Partikel versehenen Deckschicht A liegt bei Sa von mindestens 11 nm, Sp mindestens 120 nm und Sv mindestens 120 nm, bevorzugt ist Sa größer oder gleich 12 nm und Sp größer oder gleich 150 nm und Sv größer oder gleich 200 nm, besonders bevorzugt ist Sa größer oder gleich 14 nm, Sp größer oder gleich 200 nm und Sv größer oder gleich 220 nm. Liegt der Sa-Wert und Sp-Wert und Sv-Wert unterhalb der genannten Vorzugsbereiche, so wird kein ausreichendes Wickelergebnis erzielt, d.h. es bilden sich Falten, Längsrillen und andere Verdehnungen, die auf das Substrat übertragen werden können. Je höher die Werte desto besser das Wickelergebnis. Ist die Rauheit Sa und Sp und Sv größer als die Maximalwerte, so kommt es zum Durchdrücken der Partikel in die glatte Schicht, das zu einer ungenügenden Oberflächenqualität des Lackes führen kann. Je niedriger diese Werte, desto besser die optischen Eigenschaften des übertragenen Lackes. Die beschriebenen Rauheiten werden durch den Einsatz der erfindungsgemäßen Partikel (insbesondere die Partikelgröße) und den Partikelgehalt, sowie die Verteilung der Partikel über die Schichten s.o., sowie durch die geeigneten Polymere und das untenstehende Verfahren erreicht.

Wird die raue Seite zu rau, kommt es wie bereits oben erwähnt zu einer Einprägung der Rauheit in den zu übertragenden Lack auf der Rückseite beim Wickeln. Daher dürfen die Rauheitswerte der rauen Seite nicht größer sein als Sa 40 nm und Sp bei < 500 nm und Sv bei < 800 nm, bevorzugt bei Sa < 25 nm und Sp bei < 350 nm und Sv bei < 500 nm.

Neben der Rauheit hat es sich als günstig für die Lackqualität erwiesen, wenn der Glanz der Folie (bei 20°) auf beiden Folienseiten größer ist als 170, insbesondere größer als 180 und idealerweise auf beiden Seiten größer als 190 ist. Dieser gewünschte Bereich wird erreicht, wenn die erfindungsgemäßen Partikel eingesetzt werden, und die Folie unter Verwendung erfindungsgemäßer Polyesterrohstoffe, sowie gemäß erfindungsgemäßer Verfahrensbedingungen, gefertigt wird.

Die erfindungsgemäße Folie weist weiterhin einen E-Modul in beiden Folienrichtungen (TD und MD) von größer 3000 N/mm$^2$ und bevorzugt von größer 3500 N/mm$^2$ und besonders bevorzugt (in mindestens einer Folienrichtung) von > 4000 N/mm$^2$ in Längs- und Querrichtung auf. Die F5-Werte (Kraft bei 5 % Dehnung) liegen bevorzugt in Längs- und Querrichtung bei über 80 N/mm$^2$ und besonders bevorzugt bei über 90 N/mm$^2$. Diese mechanischen Eigenschaften können durch Variation der Parameter der biaxialen Streckung der Folie im Rahmen der unten angegebenen Verfahrensbedingungen eingestellt und erhalten werden.

Folien mit den genannten mechanischen Eigenschaften werden in der Anwendung unter Zug nicht übermäßig verdehnt, bleiben gut führbar und weisen eine Steifigkeit auf, wie sie in der Endanwendung gewünscht ist.

## Verfahren zur Herstellung

Die Polyesterpolymere der einzelnen Schichten werden durch Polykondensation hergestellt, entweder ausgehend von Dicarbonsäuren und Diol oder - wenn auch weniger bevorzugt - ausgehend von den Estern der Dicarbonsäuren, vorzugweise den Dimethylestern, und Diolen. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein muss und bevorzugt größer als 150 ist. Diese Werte werden zweckmäßig verwendet, um die oben beschriebenen SV-Werte der Folie zu erreichen. Ist der SV-Wert zu gering wird die Folie brüchig, ist er zu hoch, steigen die Streckkräfte im Prozess stark an und eine wirtschaftliche Herstellung ist damit deutlich verschlechtert.

Die Polymethylsilsesquioxan basierten Partikel können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Diese Methode ist weniger bevorzugt, da sie gegenüber der Folgenden mit deutlich höheren Herstellkosten für das Masterbatch verbunden ist.

Bevorzugt kann ein konzentriertes partikelhaltiges Polyester-Masterbatch mit einem schonenden Zweischneckenextruder hergestellt werden und bei der Folienextrusion mit partikelfreiem Polyester verdünnt werden. Dies ist die bevorzugte Methode, da sich im Gegensatz zu z.B. Calciumcarbonatpartikeln (die bei dieser Methode zu Agglomeratbildung neigen), überraschenderweise bei Verwendung der erfindungsgemäßen Partikel keine Agglomerate auftreten und daher die wirtschaftlichere Methode gewählt werden kann.

Es hat sich dabei als günstig erwiesen, wenn keine Masterbatche eingesetzt werden, die weniger als 30 Gew.-% Polyester enthalten. Eine weitere - wenn auch weniger bevorzugte - Möglichkeit besteht darin, Partikel direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester der einzelnen Schichten in Extrudern komprimiert und verflüssigt. In einer bevorzugten Ausführungsform liegen die Schmelztemperaturen (Temperatur gemessen in der Schmelze am Extruderausgang) zwischen 290°C und 300°C. Bei Temperaturen über 300°C steigt die Gelbzahl, bei Temperaturen unterhalb von 290°C steigt das Risiko von unaufgeschmolzenen Polymeranteilen, die zu unerwünschten Oberflächenerhebungen führen können. Diese Temperatur wird über das Durchsatz- zu Umdrehungsverhältnis des Extruders eingestellt, bzw. über die Temperaturen der Extruderheizung. Diese jeweiligen Verhältnisse und Temperaturen sind vom eingesetzten Extrudertyp abhängig und vom Fachmann mit Hilfe der genannten Parameter einzustellen. Dann werden die Schmelzen in einer Mehrschichtdüse zu flachen Schmelzfilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen. Durch die Wahl geeigneter Streckparameter kann der Fachmann die mechanischen Eigenschaften der Folie, wie E-Modul, Steifigkeit und Dehnbarkeit einstellen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80°C bis 130°C (Aufheiztemperaturen 80°C bis 130°C) und in Querrichtung in einem Temperaturbereich von 90°C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 4,0:1. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4,0:1. Zum Erreichen der gewünschten Folieneigenschaften hat es sich als vorteilhaft erwiesen, wenn die Strecktemperatur (in MD und TD) unter 125°C und bevorzugt unter 118°C liegt. Vor der Querstreckung können eine oder beide Oberfläche(n) der Folie nach den an sich bekannten Verfahren In-Line beschichtet werden. Bevorzugten ist die Folie auf der unpigmentierten Seite unbeschichtet und ganz besonders bevorzugt beidseitig unbeschichtet. Jede Beschichtung birgt das Risiko eines "Abklatschens" (=Übertragung) von Beschichtung oder Beschichtungskomponenten auf den Lack und damit auf das fertige Bauteil. Dieses ist unerwünscht.

Bei der nachfolgenden Thermofixierung wird die Folie über eine Zeitdauer von etwa 0,1 s bis 10 s unter Spannung bei einer Temperatur von 150°C bis 250°C gehalten. Anschließend wird die Folie in üblicher Weise aufgewickelt.

## Anwendung

Die erfindungsgemäßen Folien eignen sich hervorragend als Prozesshilfsfolie zur Erzeugung/Übertragung von glatten Lackoberflächen, insbesondere wenn die Lacke UV-gehärtet werden. Dabei wird der Lack auf die Folie oder auf das Bauteil aufgebracht, wobei die Aufbringung auf das Bauteil bevorzugt ist. In diesem Fall wird anschließend die Folie mit der glatten Seite unter Zug auf den Lack aufgebracht, ansonsten wird die Folie mit dem Lack auf das Bauteil aufgebracht.

Die Bauteile sind bevorzugt eben (nicht stark verformt). Bei der Aufbringung sind Verdehnungen der Folie zu vermeiden. Der Lack auf dem Bauteil wird anschließend durch die Folie hindurch durch UV-Strahlung gehärtet. Die Folie wird anschließend abgezogen.

## Analytik

Zur Charakterisierung der Rohstoffe und der Folien wurden die folgenden Messwerte benutzt:

## Messung des mittleren Partikel-Durchmessers $d_{50}$

Zur Bestimmung des Durchmessers der Partikel wird eins Malvern Master Sizer 2000 eingesetzt. Es wird der Volumenmittelwert $d_{v50}$ bestimmt.
Die Proben werden dazu in eine Küvette mit Isopropanol gegeben und diese dann in das Messgerät gestellt. Mittels Laser wird die Dispersion analysiert und aus dem Signal durch Vergleich mit einer Kalibrierkurve die Partikelgrößenverteilung bestimmt.
REM oder TEM Messungen an der mittels dieser Partikel hergestellten Folie ergeben im Durchschnitt einen um 15 - 25% niedrigeren mittleren Partikeldurchmesser als die eingesetzten Partikel. Der Partikeldurchmesser der Partikel in der Folie lässt sich also aus den Partikeldurchmessern der zur Herstellung der Folie verwendeten Partikel berechnen.

## UV/Vis Spektren bzw. Transmission bei Wellenlänge x

Die Folien wurden in Transmission in einem UV/Vis Zweistrahlspektrometer (Lambda 12 oder 35) der Firma Perkin Elmer USA gemessen. Eine etwa $(3 \times 5)$ cm große Folienprobe wird dazu über eine Flachprobenhaltevorrichtung senkrecht zum Messstrahl in den Strahlengang eingelegt. Der Messstrahl führt über eine 50 mm-Ulbrichtkugel hin zum Detektor, wo die Intensität zur Bestimmung der Transparenz bei gewünschter Wellenlänge bestimmt wird.
Als Hintergrund dient Luft. Die Transmission wird bei der gewünschten Wellenlänge abgelesen.

## Trübung, Transparenz

Die Prüfung dient zur Bestimmung der Trübung und Transparenz von Kunststoff-Folien, bei denen die optische Klarheit bzw. Trübung für den Gebrauchswert wesentlich ist. Die Messung erfolgt an dem Hazegard Hazemeter XL-21 1 der Fa. BYK Gardner nach ASTM D 1003-61.

## Glanz

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

**Gelbwert**

Der Gelbwert YID ist die Abweichung von der Farblosigkeit in Richtung "Gelb" und wird gemäß DIN 6167 gemessen.

**K-Wert**

Der K-Wert definiert die Kraft, die benötigt wird, um ein Partikel um 10% zu komprimieren. Die Messung erfolgt mit der Shimadzu Micro Compression Testing Machine MCT-W500, angelehnt an JIS R1639-5. Dabei wird der K-Wert unter einer Testkraft von 19,60 mN und einer Belastungsgeschwindigkeit von 0,892 mN/s bestimmt.

**SV-Wert (standard viscosity)**

Die Standardviskosität SV (DCE) wurde, angelehnt an DIN 53 726, bei einer Konzentration von 1 % in Dichloressigsäure in einem Ubbelohde Viskosimeter bei 25 C gemessen. Aus der relativen Viskosität ($\eta_{rel}$) wird der dimensionslose SV-Wert wie folgt ermittelt:

$$SV = (\eta_{rel}-1) \times 1000$$

Folie bzw. Polymerrohstoffe wurden dazu in DCE gelöst.

**Mechanische Eigenschaften**

Die mechanischen Eigenschaften wurden über Zugprüfung angelehnt an DIN EN ISO 527-1 und -3 (Probekörper Typ 2) an 100 mm $\times$ 15 mm großen Folienstreifen bestimmt.

**Optische Beurteilung der Oberflächengüte der glatten Seite C nach Wicklung**

Die produzierte Folie wird mindestens 5 Tage auf der gewickelten Kundenrolle gelagert und anschließend werden oben 20 Meter abgewickelt und in den folgenden Metern eine Fläche von mindestens 3 m$^2$ optisch inspiziert. Hierzu wird die Folie auf einen Tisch mit glatter Oberfläche so aufgelegt, dass die glatte Folienoberfläche vom Tisch weg ausgerichtet ist. Mindestens drei Prüfer betrachten die genannte Folienoberfläche unter einer starken Lampe unter verschiedenen Winkeln zwischen 10° und 90°. Wenn in der Folienoberfläche auf diese Weise Unebenheiten auffallen, werden diese markiert und anschließend im Elektronenmikroskop analysiert. Die Anzahl der so gefundenen Erhebungen bzw. Vertiefungen wird als Anzahl pro m$^2$ bewertet. Hierbei gibt es die folgenden Bewertungsstufen: sehr schlecht, schlecht, mittel und gut. Sehr schlecht bedeutet $\geq$ 20 Erhebungen und Vertiefungen/m$^2$, schlecht bedeutet $\geq$ 10 Erhebungen und Vertiefungen/m$^2$, mittel bedeutet $\geq$ 5 Erhebungen und Vertiefungen/m$^2$ und gut bedeutet < 5 Erhebungen und Vertiefungen/m$^2$.

**Rauheit Sa, Sp und Sv**

Die Topografie der Oberfläche wird mit einem Weißlicht-Interferometrie-Mikroskop der Firma KLA Corporation, Milpitas, CA, USA, Typ ProFilm3D mit der Messsoftware Profilm Version 4.0.6.3, nach ISO 16610-19 (Welligkeitsfilterung) und ISO 25178-2 (Rauheitsparameter) bestimmt. Gemessen wird eine Fläche von 0,84 mm $\times$ 1, 13 mm (484 $\times$ 648 Pixel) mit dem Objektiv 10X Nikon CF IC Epi Plan DI und Softwarevergrößerung (Zoom) 2x.

Zur Messung wird ein Folienstück von 25 $\times$ 100 mm Größe zwischen zwei Metallringe mit dem Durchmesser von 4 cm gespannt, so dass visuell keine Welligkeit der Folienprobe zu beobachten ist.

Die Messung erfolgt im PSI-Modus (Phase Shifting Interferometry). Alle Messparameter werden auf die mit der Software gelieferten Standardwerte gesetzt. Die Messlänge in der Dickenrichtung der Folie beträgt 8 $\mu$m (Backscan = 3 $\mu$m, Scan Length = 5 $\mu$m). Unter diesen Standardmessbedingungen beträgt der Anteil der unerkannten Pixel weniger als 10 %. Fehlende Messwerte werden von umgegebenen Pixeln rechnerisch ergänzt (Fill In Invalids). Zur Neigungskorrektur der Oberfläche (Flatten) wird ein Polynom vom Grad 3 eingesetzt.

Sämtliche S-Parameter in der Folge werden aus der S-F-Oberfläche gerechnet. Sa ist der arithmetische Mittelwert der absoluten Ordinatenwerte innerhalb des Definitionsbereiches (A):

$$Sa = \frac{1}{A} \iint\limits_{A} |z(x, y)| \, \mathrm{d}x \, \mathrm{d}y$$

Sp und Sv bezeichnen die größte Spitzenhöhe (Maximum peak height) und die größte Senkentiefe (Maximum pit height) innerhalb des Definitionsbereiches. Die Rechenvorschriften für die Sa-, Sp- und Sv-Parameter sind in der Norm ISO 25178-2 angegeben.

Die Sa-, Sp- und Sv-Werte für eine Probe sind Mittelwerte von 5 zufällig gewählten unterschiedlichen Messstellen.

Weiterhin werden zur Charakterisierung der Oberfläche die Kennzahl Total number (Number of particles / grains; gesamte Partikelanzahl) nach der in der Norm ISO 25178-2 beschriebenen und in der Messsoftware Profilm Version 4.0.6.3 implementierten Partikel-Beschneidung (Particles/Grains) mit dem Schwellenwert (Threshold) von 20 nm benutzt.

**Beispiele**

Beispiel 1 und VB1 - 3

Die Polymermischungen werden bei 292°C aufgeschmolzen und durch eine Breitschlitzdüse auf eine auf 50°C temperierte Kühlwalze elektrostatisch angelegt. Anschließend wird sie bei den folgenden Bedingungen längs- und dann quergestreckt:

| Längsstreckung | Aufheiztemperatur | 75 - 115 | °C |
|---|---|---|---|
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1. Fixierfeld) | 3,8 | |
| Fixierung | Temperatur | 237 - 150 | °C |
| | Dauer | 3 | s |
| Fixierung | Temperatur 1. Fixierfeld | 170 | °C |

In den Beispielen kommen die folgenden Rohstoffe zum Einsatz:

PET1 = Polyethylenterephthalatrohstoff aus Ethylenglykol und Terephthalsäure mit einem SV Wert von 820.

PET2 = Polyethylenterephthalatrohstoff aus Ethylenglykol und Terephthalsäure mit einem SV Wert von 790. Der Rohstoff enthält 1 Gew.-% Calciumcarbonat Vaterit vom Hersteller Maruo, oberflächenbehandelt wie in Patent EP-A-0 460 640 beschrieben wobei sich 50 % der Partikel in einem Größenbereich von +/- 0,2 $\mu$m um den Partikeldurchmesser von 1,0 $\mu$m befinden. Das Calciumcarbonat Partikel ist definitionsgemäß nicht vernetzt (Salz) und enthält in der Partikelgrundstruktur keine $C_nH_{2n+x}$ Einheiten. Der K-Wert lag bei > 32.

PET3 = Polyethylennaphthalatrohstoff aus Ethylenglykol und 1,6-Naphthalindicarbonsäure.

PET4 = Polyethylenterephthalatrohstoff mit einem SV-Wert von 710, der 25 Mol-% Isophthalsäure als Comonomer enthält.

PET5 = Polyethylenterephthalatrohstoff aus Ethylenglykol und Terephthalsäure mit einem SV Wert von 790. Der Rohstoff enthält 5 Gew.-% PMSQ (E+ 508 von Coating Products) wobei sich 65 % der Partikel in einem Größenbereich von +/- 0,2 $\mu$m um den Partikeldurchmesser von 0,8 $\mu$m befinden. Die PMSQ Partikel sind über Si-O Bindungen kovalent vernetzt und weisen zudem zahlreiche CH3 Gruppen auf (Formel $C_nH_{2n+x}$, wobei n = 1 und X = 1). Der K-Wert der Partikel lag bei 15,1.

Die nachfolgende Tabelle 1 fasst die Rezepturen, und resultierenden Folieneigenschaften zusammen:

| | | Beispiel 1 | VB1 | VB2 | VB3 |
|---|---|---|---|---|---|
| Schicht | Foliendicke [µm] | 75 | 75 | 75 | 75 |
| | Dicke A [µm] | 2,5 | 2,5 | 2,5 | 2,5 |
| A-Schicht | Dicke B [µm] | 65,7 | 65,7 | 65,7 | 65,7 |
| | Dicke C [µm] | 6,8 | 6,8 | 6,8 | 6,8 |
| | PET 1 [%] | 95 | 60 | 95 | 95 |
| | PET 2 [%] | | 40 | | |
| | PET 3 [%] | | | | |
| | PET 4 [%] | | | | |
| | PET 5 [%] | 5 | | 5 | 5 |
| B-Schicht | PET 1 [%] | 60 | 60 | 50 | 60 |
| | PET 2 [%] | | | | |
| | PET 3 [%] | | | 10 | |
| | PET 4 [%] | | | | |
| | PET 5 [%] | | | | |
| | Eigenregenerat [%] | 40 | 40 | 40 | 40 |
| C-Schicht | PET 1 [%] | 100 | 100 | 100 | 20 |
| | PET 2 [%] | | | | |
| | PET 3 [%] | | | | |
| | PET 4 [%] | | | | 80 |
| | PET 5 [%] | | | | |
| Transparenz | in % | 90 | 91 | 90,5 | 91,5 |
| Trübung | in % | 4,5 | 3,5 | 4,4 | 4,4 |
| Glanz (20°) | C-Schicht / A-Schicht | 201 / 200 | 203 / 182 | 202 / 199 | 200 / 195 |
| Gelbzahl YID | | 1,7 | 1,6 | 1,8 | 1,7 |
| E-Modul MD | N/mm² | 4000 | 3900 | 4100 | 4050 |
| E-Modul TD | N/mm² | 5400 | 5300 | 5320 | 5450 |
| F5 MD | N/mm² | 200 | 195 | 206 | 205 |
| F5 TD | N/mm² | 275 | 260 | 267 | 270 |
| Transmission bei 353nm | in % | 75 | 76 | 8 | 78 |
| Rauheit Sa der Deckschicht (A) | in nm | 16 | 15 | 16 | 17 |
| Rauheit Sp der Deckschicht (A) | in nm | 250 | 260 | 248 | 245 |
| Rauheit Sa der Deckschicht (C) | in nm | 2 | 1,7 | 2 | 2,1 |
| Rauheit Sp der Deckschicht (C) | in nm | 35 | 40 | 37 | 38 |
| Optische Beurteilung | | gut | gut - mittel | gut | gut |
| Wickelergebnis | | gut | gut | gut | gut |
| Bemerkung | | Es wurde bei der Weiterverarbeitung kein Abrieb festgestellt. | Bei der Weiterverarbeitung wurde Abrieb gefunden, der nach der Analyse aus Polyester und Calciumcarbonat (vornehmlich Calciumcarbonat) bestand, und zu Verprägungen im Lack geführt hat. Schon die optische Beurteilung der Folie ergab mehr Erhebungen, als Beispiel 1. | Aufgrund des niedrigen UV-Durchganges, gelang die Aushärtung des aufgebrachten Lackes durch die Folie mit UV-Licht nicht. | Bei der Weiterverarbeitung wurde auf dem Lack Polyester gefunden, da dieser aus der glatten Seite aufgrund der geringeren Kristallinität übertragen wurde. |

**Patentansprüche**

1. Mindestens dreischichtige biaxial orientierte Polyesterfolie, enthaltend mindestens eine Basisschicht B, eine raue Deckschicht A und eine glatte Deckschicht C, wobei die Deckschichten A und C jeweils Außenschichten sind und auf den sich gegenüberliegenden Oberflächen der Basisschicht B angeordnet sind, wobei die Deckschicht A Polymethylsilsesquioxan basierte Partikel enthält, die Deckschicht C weniger als 0.1 Gew.-% Partikel enthält, die von den Polymethylsilsesquioxan basierten Partikeln der Deckschicht A verschieden sind (wobei die Gewichtsprozentangaben sich auf die Masse der jeweilige Schicht beziehen) und wobei der Polyester, der zur Herstellung aller Schichten der mindestens dreischichtigen Polyesterfolie verwendet wird, keine von Naphthalin-2,6-dicarbonsäure abgeleiteten Einheiten als Wiederholungseinheit enthält und wobei die Folie insgesamt weniger als 0.1 Gew.-% (bezogen auf die Masse der Gesamtfolie) Partikel enthält, und wobei die Polyester, die zur Herstellung der Deckschichten der Folie verwendet werden, Isophthalsäure-abgeleitete Wiederholungseinheiten in einer Menge von < 19 Gew.-% (bezogen auf die Masse der jeweiligen Deckschicht) enthalten.

2. Polyesterfolie nach Anspruch 1, wobei die Deckschicht A Polymethylsilsesquioxan basierte Partikel in einer Menge von 0,1 Gew.-% bis 0,7 Gew.-%, bevorzugt von 0,2 Gew.-% bis 0,35 Gew.-% (bezogen auf die Gesamtmenge der Deckschicht A enthält.

3. Polyesterfolie nach Anspruch 1 oder 2, wobei die Polymethylsilsesquioxan basierten Partikel einen gemittelten Durchmesser $d_{50}$ von 0,5 $\mu$m bis 1,5 $\mu$m, bevorzugt 0,6 $\mu$m bis 1,2 $\mu$m, besonders bevorzugt von 0,65 $\mu$m bis 1,0 $\mu$m aufweisen.

4. Polyesterfolie nach einem oder mehreren der Anspruch 1 bis 3, wobei die Polymethylsilsesquioxan basierten Partikel kovalent gebundene Einheiten der Formel CnH2n+x enthalten, mit 0 < n < 10 und x = 0 oder 1 aufweisen.

5. Polyesterfolie nach einem oder mehreren der Ansprüche 1 bis 4, wobei die Folie Partikel aus inkompatiblen Polymeren zu weniger als 0,1 Gew.-%, bevorzugt zu 0 Gew.-% (bezogen auf die Masse der Gesamtfolie) enthält.

6. Polyesterfolie nach einem oder mehreren der Ansprüche 1 bis 5, wobei die Folie Titandioxidpartikel und/oder Bariumsulfatpartikel zu weniger als 0,05 Gew.-%, bevorzugt zu weniger als 0,03 Gew.-% und besonders bevorzugt zu 0 Gew.-% (bezogen auf die Masse der Gesamtfolie) enthält.

7. Polyesterfolie nach einem oder mehreren der Ansprüche 1 bis 6, **dadurch gekennzeichnet, dass** die Folie Partikel aus Calciumcarbonat und/oder Siliziumdioxid und/oder Aluminiumtrioxid zu weniger als 0,05 Gew.-%, bevorzugt zu weniger als 0, 03 Gew.-% und besonders bevorzugt zu weniger als 0,01 Gew.-% (bezogen auf die Masse der Gesamtfolie) enthält.

8. Polyesterfolie nach einem oder mehreren der Ansprüche 1 bis 7, wobei die Gesamtfoliendicke mindestens 12 $\mu$m bis maximal 90 $\mu$m, bevorzugt mindestens 23 $\mu$m bis maximal 80 $\mu$m, besonders bevorzugt mindestens 35 $\mu$m bis maximal 76 $\mu$m beträgt.

9. Polyesterfolie nach einem oder mehreren der Ansprüche 1 bis 8, wobei die Dicke der Deckschicht A mindestens 0,8 $\mu$m bis maximal 3,7 $\mu$m, bevorzugt mindestens 1,0 $\mu$m bis maximal 3,5 $\mu$m, besonders bevorzugt mindestens 1,4 bis maximal 3,0 $\mu$m beträgt.

10. Polyesterfolie nach einem oder mehreren der Ansprüche 1 bis 9, wobei die Dicke der Deckschicht C mindestens 2 $\mu$m, bevorzugt mindestens 2,5 $\mu$m, besonders bevorzugt mindestens 3 $\mu$m bis maximal 8,0 $\mu$m beträgt.

11. Polyesterfolie nach einem oder mehreren der Ansprüche 1 bis 10, wobei die Polyester, die zur Herstellung der Deckschichten der Folie verwendet werden, Isophthalsäure-abgeleitete Wiederholungseinheiten in einer Menge von < 15 Gew.-%, bevorzugt von < 10 Gew.-% (bezogen auf die Masse der jeweiligen Deckschicht) enthalten und der Anteil an Cyclohexandimethanol-abgeleiteten Wiederholungseinheiten in den Polyestern der Gesamtfolie bei < 2 Gew.-% (bezogen auf die Masse der Gesamtfolie) liegt.

12. Polyesterfolie nach einem oder mehreren der Ansprüche 1 bis 11, wobei die Deckschicht C lediglich Partikel enthält, die gegebenenfalls bei der Herstellung des verwendeten Polyesters als Katalysatorrückstände anfallen.

13. Mindestens dreischichtige biaxial orientierte Polyesterfolie, enthaltend mindestens eine Basisschicht B, eine raue Deckschicht A und eine glatte Deckschicht C, wobei die Deckschichten A und C jeweils Außenschichten sind und auf den sich gegenüberliegenden Oberflächen der Basisschicht B angeordnet sind und wobei die Folie die folgenden Eigenschaften aufweist:

- Eine Transparenz von 85 bis 97 %
- Eine Trübung von < 7 %
- Eine Gesamtfoliendicke von 12-90 $\mu$m
- Eine glatte Deckschicht C mit einer Rauheit Sa < 10 nm, Sp < 100 nm, Sv < 100nm, und einer gesamten Partikelanzahl < 20, gemessen nach ISO 25178-2
- Eine glatte Deckschicht C, die weniger als 0,1 Gew.-% Partikel enthält, die von den Polymethylsilsesquioxan basierte Partikel in der Deckschicht A verschieden sind
- Eine glatte Deckschicht C mit einer Dicke von mindestens 2 $\mu$m
- Eine raue Deckschicht A mit einer Rauheit Sa $\geq$ 11 nm, Sp $\geq$ 120 nm, Sv $\geq$ 120 nm
- wobei die raue Deckschicht A Polymethylsilsesquioxan basierte Partikel einer gemittelten Größe $d_{50}$ von 0,5 $\mu$m bis 1,5 $\mu$m und einem Partikelgehalt von 0,1 bis 0,7 Gew.-% enthält.

14. Verfahren zur Herstellung einer Polyesterfolie nach einem oder mehreren der Ansprüche 1 bis 13, wobei zunächst der Polyester bzw. die Polyestermischung der einzelnen Schichten in mehreren Extrudern komprimiert und verflüssigt wird, die Schmelzen in einer Mehrschichtdüse zu einem flachen Schmelzfilm ausgeformt werden, der dann auf einer Kühlwalze und einer oder mehreren Abzugswalzen als Vorfolie abgezogen wird, wobei diese abkühlt und sich verfestigt und anschließend biaxial orientiert wird, **dadurch gekennzeichnet, dass** die Deckschichten A und C jeweils Außenschichten sind und auf den sich gegenüberliegenden Oberflächen der Basisschicht B angeordnet sind, wobei die Deckschicht A Polymethylsilsesquioxan basierte Partikel enthält, die Deckschicht C weniger als 0.1 Gew.-% Partikel enthält, die von den Polymethylsilsesquioxan basierten Partikeln der Deckschicht A verschieden sind (wobei die Gewichtsprozentangaben sich auf die Masse der jeweilige Schicht beziehen) und wobei der Polyester, der zur Herstellung aller Schichten der mindestens dreischichtigen Polyesterfolie verwendet wird, keine von Naphthalin-2,6-dicarbonsäure abgeleiteten Einheiten als Wiederholungseinheit enthält und wobei die Folie insgesamt weniger als 0.1 Gew.-% (bezogen auf die Masse der Gesamtfolie) Partikel enthält, und wobei die Polyester, die zur Herstellung der Deckschichten der Folie verwendet werden, Isophthalsäure-abgeleitete Wiederholungseinheiten in einer Menge von < 19 Gew.-% (bezogen auf die Masse der jeweiligen Deckschicht) enthalten.

15. Verwendung einer Folie nach einem oder mehreren der Ansprüche 1 bis 13 als Prozessfolie zur Erzeugung/Übertragung von Lackoberflächen.

Europäisches Patentamt

European Patent Office

Office européen des brevets

# EUROPÄISCHER RECHERCHENBERICHT

**Nummer der Anmeldung**

**EP 22 21 5011**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y<br>A | US 2013/337206 A1 (INGLIS THOMAS [CA])<br>19. Dezember 2013 (2013-12-19)<br>* Ansprüche 1, 9, 12 *<br>* Absätze [0015] – [0019] *<br>----- | 1,2,4-7,<br>9-12,14<br>3,8,13<br>15 | INV.<br>B32B27/36<br>B32B7/022<br>B32B7/023<br>B32B27/08 |
| X<br>Y<br>A | US 2005/287358 A1 (INGLIS THOMAS L [CA])<br>29. Dezember 2005 (2005-12-29)<br>* Ansprüche 1, 2, 6, 9 *<br>* Absätze [0001], [0011], [0013] *<br>----- | 1,2,4-7,<br>9-12,14<br>3,8,13<br>15 | B32B27/18<br>C08J5/18<br>C08L67/00 |
| Y<br>A | EP 0 931 808 A1 (TEIJIN LTD [JP])<br>28. Juli 1999 (1999-07-28)<br>* Anspruch 1 *<br>* Absätze [0022], [0048] *<br>----- | 3,8,13<br>15 | |
| A | DE 10 2010 026328 A1 (MITSUBISHI POLYESTER FILM GMBH [DE])<br>12. Januar 2012 (2012-01-12)<br>* Anspruch 1 *<br>* Absätze [0021], [0027] *<br>----- | 15 | |
| A | DE 10 2010 019010 A1 (MITSUBISHI POLYESTER FILM GMBH [DE])<br>3. November 2011 (2011-11-03)<br>* Anspruch 1 *<br>* Absätze [0009], [0026], [0034] *<br>----- | 15 | RECHERCHIERTE SACHGEBIETE (IPC)<br><br>B32B<br>C08J<br>C08L |

Der vorliegende Recherchenbericht wurde für alle Patentansprüche erstellt

| Recherchenort | Abschlußdatum der Recherche | Prüfer |
|---|---|---|
| Den Haag | 12. April 2023 | Nowak, René |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 21 5011

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2023

| Im Recherchenbericht angeführtes Patentdokument | Datum der Veröffentlichung | Mitglied(er) der Patentfamilie | | Datum der Veröffentlichung |
|---|---|---|---|---|
| US 2013337206 A1 | 19-12-2013 | CA | 2508859 A1 | 30-11-2006 |
| | | US | 2006269710 A1 | 30-11-2006 |
| | | US | 2008311371 A1 | 18-12-2008 |
| | | US | 2013337206 A1 | 19-12-2013 |
| | | US | 2013337245 A1 | 19-12-2013 |
| US 2005287358 A1 | 29-12-2005 | CA | 2472420 A1 | 23-12-2005 |
| | | US | 2005287358 A1 | 29-12-2005 |
| EP 0931808 A1 | 28-07-1999 | DE | 69814327 T2 | 01-04-2004 |
| | | EP | 0931808 A1 | 28-07-1999 |
| | | JP | 3361105 B2 | 07-01-2003 |
| | | KR | 20000068497 A | 25-11-2000 |
| | | TW | 467823 B | 11-12-2001 |
| | | US | 6258442 B1 | 10-07-2001 |
| | | WO | 9902584 A1 | 21-01-1999 |
| DE 102010026328 A1 | 12-01-2012 | DE | 102010026328 A1 | 12-01-2012 |
| | | EP | 2404736 A1 | 11-01-2012 |
| | | PL | 2404736 T3 | 31-05-2017 |
| DE 102010019010 A1 | 03-11-2011 | DE | 102010019010 A1 | 03-11-2011 |
| | | EP | 2386594 A2 | 16-11-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 1410905 A
- EP 1884357 A
- EP 3178651 A
- EP 0460640 A